# EUROPEAN PATENT SPECIFICATION

(11) **EP 2 676 879 B1**
(45) Date of publication and mention of the grant of the patent: **12.08.2015**
(21) Application number: 12173090.7
(22) Date of filing: 22.06.2012
(51) Int. Cl.: A62B 25/00, B64D 11/00, A62B 7/14, A62B 18/08

(54) **Passenger reading light integrated in PSU/emergency oxygen device**
In einer PSU-/Notfall-Sauerstoffvorrichtung integrierte Passagierleselampe
Lampe de lecture de passagers intégrée dans un dispositif d'oxygène d'urgence/PSU

(43) Date of publication of application: 25.12.2013
(73) Proprietor: Zodiac Aerotechnics, 78370 Plaisir (FR)
(72) Inventor: Rittner, Wolfgang, 23623 Ahrensbök (DE); Meckes, Rüdiger, 23919 Berkenthin (DE); Hoffmann, Frederik, 23558 Lübeck (DE)
(74) Representative: Eisenführ Speiser

(56) References cited:
- EP-A2- 1 834 876
- WO-A1-2006/032883
- GB-A- 839 261
- GB-A- 897 531
- US-A- 2 934 293
- US-A1- 2007 057 121

## Description

The invention relates to a Passenger service unit for passenger of an aircraft, comprising an emergency oxygen device comprising an oxygen source, a control unit and means for delivering oxygen from the oxygen source to a passenger, an emergency energy storage unit connected to the emergency oxygen device for providing energy to start and/or control oxygen supply in case of an emergency situation.

US 2007/0057121 discloses a passenger service unit comprising reading lights, flight attendant call light, flight attendant call, cancellation switch and personal air outlets. The passenger service unit is disclosed to provide functionality for a flight attendant call light, reading light, personal air outlets, emergency oxygen, in flight entertainment system control and a cabin signage, such as fasten seatbelt.

GB 897797531, which is considered the closest prior art, discloses a breathing mask packed in a mask locker, wherein the mask locker may include a light, which is automatically turned on, when the locker door is opened, so as to illuminate the suspended mask.

Such passenger service units are usually mounted in a sealing compartment above a passenger seat in an aircraft and may comprise a single component or a number of components for being used by the passenger on board an aircraft in regular flight condition or in an emergency situation. One component which may be typically comprised in such a passenger service unit is an emergency oxygen device adapted for providing oxygen to the passenger in case of an emergency situation like a decompression situation, smoke or fire on board the aircraft or in any other situation wherein the passenger needs to be supplied with oxygen to maintain his vital functions.

One problem associated with such passenger service units is related to the use of such emergency oxygen device in case of an emergency. Usually, oxygen masks which are comprised in such an emergency oxygen device are automatically released in case of an emergency situation or may be manually released by activating a release mechanism a remote control by a crew member of the aircraft. In such case, the oxygen masks usually fall out of the sealing compartment, e.g. by opening, releasing or removing a cover lid closing said compartment. The oxygen mask then must be put on by the passenger to cover his mouth and nose. This often is problematic for the passenger because the passenger feels to be in a dangerous situation, is not used to the oxygen mask and its proper function and design and may be hindered to recognize essential features of the oxygen mask like its orientation because of smoke, fog or the like occurring inside the aircraft in the emergency situation correctly. Furthermore, the cabin lighting may be damaged or shut down resulting from a damage or breakdown of relevant aircraft systems, e.g. the power supply system and thus the passenger needs to handle the oxygen mask in darkness. It is an object of the invention to facilitate and improve handling of the oxygen mask in such emergency situation for the passenger.

According to the invention, this problem is solved by a passenger service unit according to claims 1. According to the invention, the energy storage unit which is part of the emergency oxygen device to ensure proper release of the oxygen mask and proper functioning of the control unit for controlling and delivering oxygen from the oxygen source, e.g. by starting the oxygen flow by releasing a valve or igniting an ignition device of a chemical oxygen generator is used to supply energy to a light source which is part of the passenger service unit. Said light source is activated simultaneously with the emergency oxygen device wherein it is to be understood that activation of the emergency oxygen device may be understood as a release of the oxygen mask out of the passenger service unit or the release of any other means to be recognized by the passenger for any further action like a pulling action or switching action for activating the oxygen flow or receiving the oxygen masks or the like. The light source is activated to improve visibility of such oxygen mask or any other component of the emergency oxygen device to be recognized and used by the passenger. Generally, the light source may lighten the environment of the passenger to compensate for a broken-down cabin lighting but the light source may in particular lighten the specific component to be recognized by the passenger for the next step to receive oxygen from the emergency oxygen device. The energy required by the light source is received from the emergency energy storage unit and thus can be safely provided to the light source even in case of breakdown of relevant aircraft system components like a power supply system. Thus, an independent, local power supply for the light source is provided according to the invention. The light source is automatically activated by the emergency light control unit which thus needs no manual action by the passenger or a crew member to activate the illumination. For this purpose, the emergency light control unit may be connected to the control unit of the emergency oxygen device or be a part of it to receive an emergency signal in case of an emergency situation leading to the activation of the emergency oxygen device for simultaneously activating the light source.

According to the invention the light source is adapted to be used as a reading light during non-emergency situations and is connected to a manual switch for activating said light source manually. According to this preferred embodiment the light source may be used as a reading light in regular flight conditions and may be activated by the passenger via a manual switch. In such case, it is to be understood that the light source shall be connected to a power supply system of the aircraft for providing electrical energy to the light source in such regular flight condition for being used as a reading light. Further, it is to be understood that in case of an emergency situation the reading light is supplied with power in a bypass arrangement to the manual switch so that the light source can be activated independent from whether the manual switch is the ON or OFF position.

Furthermore, it is preferred to provide a connecting terminal for connecting said light source to an onboard energy supply system of the aircraft. This preferred embodiment will ensure a full loading state of the emergency energy storage unit as it is not required to supply energy to the light source when being used in regular flight condition.

According to a further preferred embodiment the passenger service unit may comprise an energy harvesting element, in particular a photovoltaic element, a Peltier element or a mechano-electrical energy converter for converting vibrations of the passenger service unit into electrical energy, connected to the emergency energy storage unit for charging said emergency energy storage unit. Such energy harvesting element allows to generate energy, in particular electrical energy during regular flight conditions to change the emergency energy storage unit and ensure an always fully charged state of this storage unit.

Furthermore, it is preferred that the emergency oxygen device further comprises an oxygen mask connected to said oxygen source via an oxygen tube, wherein said oxygen mask is stored within said passenger service unit behind a releasable cover lid, said cover lid being fixed in a closed position during non-emergency situation and is adapted to be released from said closed position to provide access to the oxygen mask in an emergency situation,
wherein said emergency light control unit is adapted to activate said light source upon release of said cover lid. According to this preferred embodiment the light source is activated in the same moment wherein the oxygen mask is released out of the compartment wherein the emergency oxygen device is mounted and falls down in the direction to the passenger. This allows to immediately direct the attention of the passenger to said oxygen mask because of the simultaneous lighting effect occur ring upon falling down of the oxygen mask. This will significantly facilitate further action of the passenger for using the oxygen mask and shorten the time until delivery of oxygen to the passenger by accelerating the process of putting on the oxygen mask by the passenger.

Still further, it is preferred that the light source is arranged behind said cover lid. According to this preferred embodiment, the light source is part of the emergency oxygen device and arranged such that it may specifically illuminate and highlight the oxygen mask and the tube connecting said oxygen mask to the oxygen source against the environment by being arranged directly above said tube and oxygen mask in the dropped state.

According to a further preferred embodiment the activated light source produces a light beam having a limited cross-sectional area and an oxygen mask is arranged in a storage space and connected to the oxygen mask via a tube in such a position to hang down in a path after being released from the storage space in an emergency situation wherein said path is at least partially, preferably completely illuminated by the light beam of said light source. According to this embodiment, the light source is arranged and dimensioned such that the important components of the emergency oxygen device are illuminated and marked by said light source in an emergency situation and thus facilitates the use of the oxygen mask by the passenger by directing his attention to the relevant parts of the emergency oxygen device, namely the oxygen mask or the tubing of said oxygen mask. This will allow the passenger to quickly put on the oxygen mask or quickly conduct a pulling action required for activating oxygen flow or both and thus shorten the time until the start of oxygen delivery to the passenger.

A preferred embodiment of the invention is explained with reference to the Figures. In the Figure, a schematic view of a passenger service unit according to the invention in a partly cut away view is depicted.
Fig. 1 shows the device in a regular flight condition.
Fig. 2 shows the device in an emergency situation.

The passenger service unit 1 shown in the Figures is mounted in a sealing compartment 2 defined by a casing in an aircraft. An emergency oxygen device 10 is part of said passenger service unit. Said emergency oxygen device 10 comprises a chemical oxygen generator 11, a control unit 12 and an oxygen mask 13 connected to said control unit and said chemical oxygen generator via a flexible tubing 14.

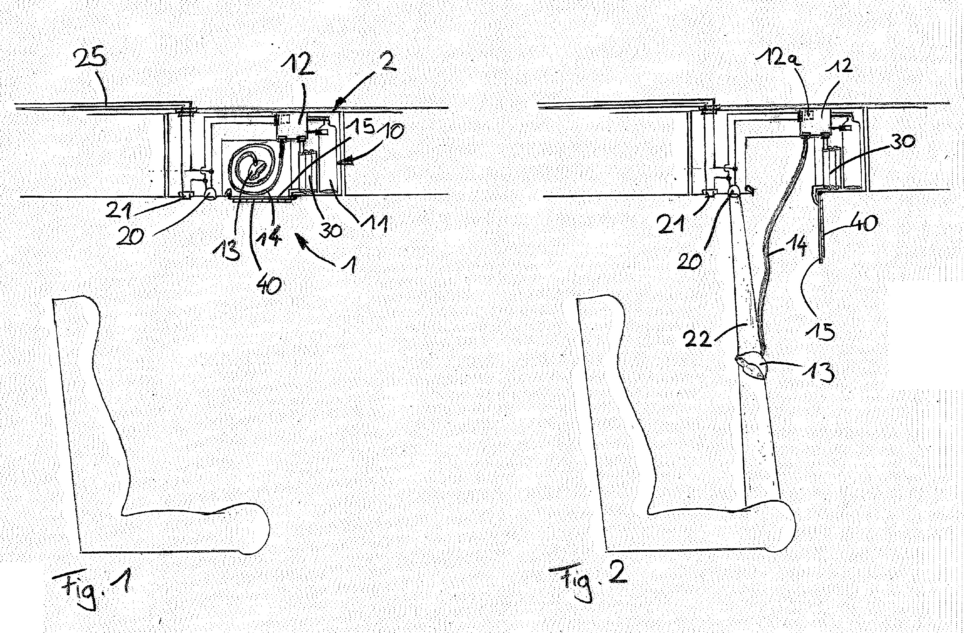

Said oxygen masks and flexible tubing is stored in a storage space inside said passenger service unit in regular flight condition as can be seen in Fig. 1.

The passenger service unit further comprises a reading light 20 which can be activated by the passenger via a manual switch 21. The reading light is supplied with electrical energy from the aircraft main supply 25 in regular flight condition. It is to be understood that the passenger service unit may further comprise any other means for entertaining or assisting the passenger on board an aircraft like a nozzle for air condition, a manual switch for requesting assistance by the crew of the aircraft, entertainment means like a TV screen or a socket for earphones or the like.

The emergency oxygen device further comprises an emergency energy storage unit 30 which is connected to an energy harvesting element 40 inside said passenger service unit. The energy harvesting element comprises a small photovoltaic cell which is sufficient for providing a small current charging the emergency energy storage unit and keeping the storage unit in a fully charged state.

Fig. 2 shows the passenger service unit after activation of the emergency oxygen device in an emergency situation. As can be seen, a cover lid 15 closing the storage space wherein the oxygen masks and the flexible tubing had been stored, is released and the oxygen mask 13 has fallen out of the storage space. In this situation, the oxygen mask hangs down to the passenger in a direction and range defined by the tubing 14 and the connection of the tubing to the other components of the emergency oxygen device.

At the same time the cover lid 15 has been released the control unit 12 of the emergency oxygen device incorporating an emergency light control unit 12a has activated the reading light 20 of the passenger service unit to illuminate the oxygen mask with a light beam 22. Said activation is made independently from the manual switch 21 for manual operation of the reading light in regular flight condition. The energy required for the activation process of the reading lights and for supply of the reading lights is taken from the emergency energy storage unit 30 of the emergency oxygen device and directly supplied to the reading light by passing the manual switch 21. Said energy is controlled such that it is supplied to the reading lights for a predetermined time interval of two minutes to allow the passenger easy handling of the oxygen masks after its release. Alternatively, the reading light is activated until the flow of oxygen is activated by a pulling action of the passenger via the oxygen masks or until a predetermined time interval after said activation has elapsed.

As can be seen in Fig. 2, the reading light give's a focused beam directed onto the oxygen mask to allow fast recognition of the oxygen masks by the passenger in an emergency situation.

## Claims

1. Passenger service unit (1) for passenger of an aircraft, comprising
- an emergency oxygen device (10) comprising an oxygen source (11), a control unit (12) and means (13, 14) for delivering oxygen from the oxygen source (11) to a passenger,
- an emergency energy storage unit (20) connected to the emergency oxygen device (10) for providing energy to start and/or control oxygen supply in case of an emergency situation,
- a light source (20) adapted to be used as a reading light during non-emergency situations and connected to a manual switch (21) for activating said light source manually,
**characterized in that** said light source is connected to the emergency energy storage unit (30) and an emergency light control unit (12a) adapted to activate said light source (20) at the time the emergency oxygen device (10) has been activated.

2. Passenger service unit according to claim 1,
**characterized by** a connecting terminal for connecting said light source to an onboard energy supply system (25) of the aircraft.

3. Passenger service unit according to claim 1 or 2,
**characterized by** an energy harvesting element (40) in particular a photovoltaic element, a Peltier element or a mechano-electrical energy converter for converting vibrations of the passenger service unit into electrical energy, connected to the emergency energy storage unit (30) for charging said emergency energy storage unit.

4. Passenger service unit according to any of the preceding claims,
**characterized in that** the emergency oxygen device (10) further comprises an oxygen mask (13) connected to said oxygen source (11) via an oxygen tube (14), wherein said oxygen mask (13) is stored within said passenger service unit (1) behind a releasable cover lid (15), said cover lid being fixed in a closed position during non-emergency situation and is adapted to be released from said closed position to provide access to the oxygen mask (13) in an emergency situation, wherein said emergency light control unit (12a) is adapted to activate said light source upon release of said cover lid.

5. Passenger service unit according to the preceding claim 4,
**characterized in that** the light source (20) is arranged behind said cover lid (15).

6. Passenger service unit according to any of the preceding claims,
**characterized in that** the activated light source (20) produces a light beam having a limited cross-sectional area and wherein an oxygen mask (13) is arranged in a storage space and connected to the oxygen source via a tube (14) in such a position to hang down in a path after being released from the storage space in an emergency situation wherein said path is at least partially, preferably completely, illuminated by the light beam of said light source.

## Patentansprüche

1. Passagier-Serviceeinheit (1) für einen Passagier eines Flugzeugs, umfassend
- eine Notfallsauerstoffvorrichtung (10), umfassend eine Sauerstoffquelle (11), eine Steuerungseinheit (12) und ein Mittel (13, 14) zum Zuführen des Sauerstoffs von der Sauerstoffquelle (11) zu einem Passagier,
- eine Notfallenergiespeichereinheit (30), die an die Notfallsauerstoffvorrichtung (10) zur Bereitstellung von Energie zum Starten und/oder Steuern der Sauerstoffversorgung im Falle einer Notfallsituation angeschlossen ist,
- eine Lichtquelle (20), die ausgebildet ist, um während Nicht-Notfallsituationen als Leseleuchte verwendet zu werden und mit einem manuellen Schalter (21) verbunden ist, um die Lichtquelle manuell zu aktivieren,
**dadurch gekennzeichnet, dass** die Lichtquelle mit der Notfallenergiespeichereinheit (30) und einer Notfalllichtsteuerungseinheit (12a) verbunden ist, und diese ausgebildet sind, um die Lichtquelle (20) in dem Zeitpunkt zu aktivieren, in dem die Notfallsauerstoffvorrichtung (10) aktiviert wird.

2. Passagier-Serviceeinheit nach Anspruch 1,
**gekennzeichnet durch** eine Anschlussklemme zum Abschließen der Lichtquelle an ein bordeigenes Energieversorgungssystem (25) des Flugzeugs.

3. Passagier-Serviceeinheit nach Anspruch 1 oder 2,
**dadurch gekennzeichnet, dass** ein Energiegewinnungselement (40), insbesondere ein photovollaisches Element, ein Peltier Element oder ein elektromechanischer Energiewandler, zur Wandlung von Vibrationen der Passagier-Serviceeinheit in elektrische Energie, an die Notfallenergiespeichereinheit (30) angeschlossen ist, um den Notfallenergiespeicher zu laden.

4. Passagier-Serviceeinheit nach einem der vorhergehenden Ansprüche,
**dadurch gekennzeichnet, dass** die Notfallsauerstoffvorrichtung (10) eine Sauerstoffmaske (13) umfasst, die mittels eines Sauerstoffschlauches (14) mit der Sauerstoffquelle (11) verbunden ist, wobei die Sauerstoffmaske (13) während einer Nicht-Notfallsituation innerhalb der Passagier-Serviceeinheit (1) hinter einem entriegelbaren Verschlussdeckel (15) verstaut ist, der Verschlussdeckel in einer verriegelten Position fixiert ist und dieser ausgebildet ist, um in einer Notfallsituation diese verriegelte Position zu verlassen, um Zugang zu der Sauerstoffmaske (13) bereitzustellen, wobei die Notfalllichtkontrolleinheit (12a) ausgebildet ist, um die Lichtquelle beim Entriegeln des Verschlussdeckels zu aktivieren.

5. Passagier-Serviceeinheit nach Anspruch 4,
**dadurch gekennzeichnet, dass** die Lichtquelle (20) hinter dem Verschlussdeckel (15) angeordnet ist.

6. Passagier-Serviceeinheit nach einem der vorhergehenden Ansprüche,
**dadurch gekennzeichnet, dass** die aktivierte Lichtquelle (20) ein Lichtbündel mit einer begrenzten Querschnittsfläche erzeugt, wobei die Sauerstoffmaske (13) in einer derartigen Position in einem Stauraum angeordnet ist und mittels eines Schlauches (14) mit der Sauerstoffquelle (11) verbunden ist, um in einer Notfallsituation nach dem Freisetzen aus dem Stauraum in einem Pfad herunterzuhängen, wobei der Pfad wenigstens teilweise, vorzugsweise vollständig, durch das Lichtbündel der Lichtquelle ausgeleuchtek wird.

## Revendications

1. Bloc de service de passager (1) pour passager d'un avion, comprenant
- un dispositif d'oxygène d'urgence (10) comprenant une source d'oxygène (11), une unité de commande (12) et des moyens (13, 14) pour délivrer de l'oxygène à partir de la source d'oxygène (11) un passager,
- une unité de stockage d'énergie d'urgence (30) branchée au dispositif d'oxygène d'urgence (10) pour fournir de l'énergie pour démarrer et/ou commander l'alimentation en oxygène dans le cas d'une situation d'urgence,
- une source de lumière (20) conçue pour être utilisée comme éclairage de lecture au cours de situations non urgentes et connectée à un interrupteur manuel (21) destiné à activer ladite source de lumière manuellement,
**caractérisé en ce que** ladite source de lumière est branchée à l'unité de stockage d'énergie d'urgence (30) et à une unité de commande d'éclairage d'urgence (12a) conçue pour activer ladite source de lumière (20) au moment où le dispositif d'oxygène d'urgence (10) est activé.

2. Bloc de service de passager salon la revendication 1,
**caractérisé par** un terminal de branchement pour brancher ladite source de lumière à une système d'alimentation en énergie embarqué (25) de l'avion.

3. Bloc de service de passager selon la revendication 1 ou 2,
**caractérisé par** un élément de collecte d'énergie (40), en particulier une élément photovoltaïque, un élément à effet Peltier ou un convertisseur d'énergie mécano-électrique pour convertir les vibrations du bloc de service de passager en énergie électrique, branché à l'unité de stockage d'énergie d'urgence (30) pour charger ladite unité de stockage d'énergie d'urgence.

4. Bloc de service de passager selon l'une quelconque des revendications précédentes,
**caractérisé en ce que** le dispositif d'oxygène d'urgence (10) comprend en outre un masque à oxygène (13) branché à ladite source d'oxygène (11) au moyen d'un tube à oxygène (14), dans lequel ledit masque à oxygène (13) est stocké à l'intérieur dudit bloc de service de passager (1) derrière un couvercle amovible (15), ledit couvercle étant fixé dans une position fermée au cours d'une situation non urgente et conçu pour être libéré de ladite position fermée pour permettre l'accès au masque à oxygène (13) dans une situation d'urgence, dans lequel ladite unité de commande d'éclairage d'urgence (12a) est conçue pour activer ladite source de lumière lors de la libération dudit couvercle.

5. Bloc de service de passager selon la revendication 4 précédente,
**caractérisé en ce que** la source de lumière (20) est placée derrière ledit couvercle (15).

6. Bloc de service de passager selon l'une quelconque des revendications précédentes,
**caractérisé en ce que** la source de lumière activée (20) produit un faisceau lumineux ayant une section transversale limitée et dans lequel un masque à oxygène (13) est placé dans un espace de stockage et branché la source d'oxygène via un tube (14) dans une position telle qu'il est suspendu dans une trajectoire après avoir été libéré de l'espace de stockage dans une situation d'urgence, ladite trajectoire étant au moins partiellement, de préférence complètement, éclairée par le faisceau lumineux de ladite source de lumière.
